# EUROPÄISCHE PATENTSCHRIFT

(11) **EP 3 598 886 B1**
(45) Veröffentlichungstag und Bekanntmachung des Hinweises auf die Patenterteilung: **08.09.2021**
(21) Anmeldenummer: 19172922.7
(22) Anmeldetag: 07.05.2019
(51) Int. Cl.: A01D 41/14

(54) **SELBSTFAHRENDE ERNTEMASCHINE**
SELF-PROPELLED HARVESTER
ENGIN D'ABATTAGE-FAÇONNAGE AUTOMOTEUR

(30) Priorität: 24.07.2018 DE 102018117903
(43) Veröffentlichungstag der Anmeldung: 29.01.2020
(73) Patentinhaber: CLAAS Selbstfahrende Erntemaschinen GmbH, 33428 Harsewinkel (DE)
(72) Erfinder: Beschorn, Udo, 33428 Harsewinkel (DE); Middelberg, René, 49080 Osnabrück (DE); Roters, Mark, 48155 Münster (DE); Neitemeier, Dennis, 59510 Lippetal (DE); Wielenberg, Andreas, 32049 Herford (DE)
(74) Vertreter: CLAAS Gruppe

(56) Entgegenhaltungen:
- EP-A1- 2 803 256
- EP-A1- 3 072 379
- EP-A1- 3 552 474
- US-B2- 9 585 309
- US-B2- 9 807 933

## Beschreibung

Die vorliegende Erfindung betrifft eine selbstfahrende Erntemaschine gemäß dem Oberbegriff des Anspruches 1 sowie ein Verfahren für die Ansteuerung eines an einer selbstfahrenden Erntemaschine angeordneten Vorsatzgerätes zur Aufnahme von Erntegut gemäß dem Oberbegriff des Anspruches 12.

Für die Aufnahme von Erntegut kommen Vorsatzgeräte zum Einsatz, welche an einer Aufnahmevorrichtung der Erntemaschine angeordnet sind. Die Aufnahmevorrichtung ist dabei um eine horizontale Achse schwenkbar an der Erntemaschine angeordnet. Die Lage des Vorsatzgerätes relativ zum Boden ist mittels Aktuatoren verstellbar, welche von einer Steuerungsvorrichtung der Erntemaschine, die zur Lageregelung des Vorsatzgerätes eingerichtet ist, ansteuerbar sind. An dem Vorsatzgerät ist zumindest eine erste Sensoranordnung angeordnet, welche der Bestimmung eines Abstands des Vorsatzgerätes zum Boden dient.

Eine selbstfahrende Erntemaschine sowie ein Verfahren für eine Ansteuerung eines an einer selbstfahrenden Erntemaschine angeordneten Vorsatzgerätes zur Aufnahme von Erntegut sind aus der EP 1 374 661 B1 und der US 9 585 309 B2 bekannt. So ist es aus der EP 1 374 661 B1 bekannt, dass die Erntemaschine welche eine Aufnahmevorrichtung aufweist, an der ein Vorsatzgerät zur Aufnahme von Erntegut angeordnet ist. Zur Anpassung an die Bodenkontur ist die Aufnahmevorrichtung gegenüber der Erntemaschine mittels eines Aktuators um eine horizontale und quer zur Vorwärtsrichtung verlaufende Achse schwenkbar befestigt. Eine geeignete Steuerungsvorrichtung erfasst die Höhe des Vorsatzgerätes über dem Boden mittels einer ersten Sensoranordnung und steuert den Aktuator derart an, dass eine gewünschte Höhe des Vorsatzgerätes über dem Boden erreicht wird. Diese Steuerungsvorrichtung kann das Vorsatzgerät zusätzlich gegenüber der Aufnahmevorrichtung um eine sich horizontal und in Vorwärtsrichtung der Erntemaschine erstreckende Achse verschwenken, was beispielsweise bei Hangmähdreschern mit zur selbsttätigen horizontalen Ausrichtung des Fahrgestells mit höhenverstellbaren Rädern beim Befahren von Seitenhängen sinnvoll ist. Zur Lageregelung des Vorsatzgerätes ist eine Sensoranordnung vorgesehen, welche den Abstand zum Boden an wenigstens zwei in Fahrtrichtung voneinander beabstandeten Stellen bestimmt und dass anhand der beiden Abstandswerte die Neigung des Bodens berechnet wird, um das Vorsatzgerät mit gleichbleibendem Abstand zum Boden zu führen. Der Lagesteuerung des Vorsatzgerätes liegt dabei die Abstandsmessung zwischen dem Vorsatzgerät und dem Boden an zwei verschiedenen Messpunkten zugrunde.

Der vorliegenden Erfindung liegt die Aufgabe zugrunde, eine selbstfahrende Erntemaschine sowie ein Verfahren für die Ansteuerung eines Vorsatzgerätes an einer selbstfahrenden Erntemaschine bereitzustellen, welche sich durch eine flexiblere Lageregelung auszeichnen.

Diese Aufgabe wird erfindungsgemäß durch eine selbstfahrende Erntemaschine gemäß den Merkmalen des Anspruches 1 sowie durch ein Verfahren gemäß den Merkmalen des Anspruches 12 gelöst.

Vorteilhafte Weiterbildungen sind Gegenstand der Unteransprüche.

Gemäß dem Anspruch 1 wird eine selbstfahrende Erntemaschine mit einem Vorsatzgerät zur Aufnahme von Erntegut, welches an einer um eine horizontale Achse schwenkbar an der Erntemaschine angeordneten Aufnahmevorrichtung angeordnet ist, wobei die Lage des Vorsatzgerätes relativ zum Boden mittels Aktuatoren verstellbar ist, welche von einer Steuerungsvorrichtung der Erntemaschine, die zur Lageregelung des Vorsatzgerätes eingerichtet ist, ansteuerbar sind, wobei an dem Vorsatzgerät zumindest eine erste Sensoranordnung angeordnet ist, welche der Bestimmung eines Abstands des Vorsatzgerätes zum Boden dient. Zur Bereitstellung einer flexibleren Lageregelung wird erfindungsgemäß vorgeschlagen, dass eine zweite Sensoranordnung vorgesehen ist, welche in einem definierten Abstand vor dem Vorsatzgerät den Verlauf einer Bestandshöhe des Erntegutes als einen Lageregelungsparameter erfasst, wobei die Steuerungsvorrichtung dazu eingerichtet ist, unabhängig von einem durch die erste Sensoranordnung erfassten Abstand, anhand des durch die zweite Sensoranordnung erfassten Verlaufes der Bestandshöhe eine Sollhöhe für die Höhenführung und eine Sollneigung für die Querführung des Vorsatzgerätes zu ermitteln, und dann unter Berücksichtigung einer vorgegebenen Schneidtiefe unterhalb der Bestandshöhe eine Höhe und eine Querneigung des Vorsatzgerätes einzustellen. Eine derartige Erntemaschine ermöglicht eine vorausschauende Lageregelung, welche flexibel auf verschiedene Erntesituationen reagieren kann. So lässt sich bei hohen Schnitthöhen zur Reduzierung der Aufnahme von Stroh, Halmgut und dergleichen, wie dies bei der Ernte von Raps, Körnermais, Sonnenblumen und dergleichen der Fall ist, immer eine optimale Höhen- und Querführung erreichen. Die vorausschauende Erfassung des Verlaufs der Bestandshöhe ermöglicht es der Steuerungsvorrichtung durch eine entsprechende Ansteuerung der Aktuatorik die Lage des Vorsatzgerätes fortlaufend an auftretende Änderungen der Bestandshöhe in Längs- und Querrichtung anzupassen. Der wesentliche Vorteil der Höhenführung relativ zur Bestandshöhe ist, dass das Vorsatzgerät auch bei hohen Früchten in der Höhe immer optimal geführt wird, so dass alle Früchte geerntet werden, ohne dass unnötig viel Pflanzenmaterial in die Erntemaschine gelangt oder dass eine Bedienperson der Erntemaschine manuell die Höhe des Vorsatzgerätes korrigieren muss. Dadurch wird die Bedienperson entlastet und die Effizienz der Erntemaschine deutlich gesteigert. Der Vorteil der Querführung in Abhängigkeit von der Bestandshöhe besteht vor allem darin, dass unabhängig von der Aushubhöhe des Vorsatzgerätes durch die Aufnahmevorrichtung immer eine optimale Querführung des Vorsatzgerätes im Wesentlichen parallel zu der Bestandshöhe gewährleistet ist. Bei der selbstfahrenden Erntemaschine kann es sich insbesondere um einen Mähdrescher oder Feldhäcksler handeln. Bei dem Vorsatzgerät kann es insbesondere um ein Vorsatzgerät handeln, welches stehendes Erntegut mittels einer Vorrichtung vom Boden abtrennt und aufnimmt.

Dabei kann die Steuerungsvorrichtung dazu eingerichtet sein, als Lageregelungsparameter neben der Bestandshöhe die Position der Aufnahmevorrichtung relativ zum Boden, den Abstand des Vorsatzgerätes zum Boden und/oder einen Auflagedruck des Vorsatzgerätes auf dem Boden zu verwenden. Die Position der Aufnahmevorrichtung relativ zum Boden kann durch die Erfassung des Winkels, um den die Aufnahmevorrichtung relativ zu der Erntemaschine um die horizontale Achse verschwenkt wird, erfolgen. Aus der Position der Aufnahmevorrichtung relativ zum Boden lässt sich entsprechend der Abstand des Vorsatzgerätes zum Boden mittelbar bestimmen. Der Abstand des Vorsatzgerätes zum Boden kann unmittelbar durch an dem Vorsatzgerät angeordnete mechanische Abstandssensoren, insbesondere über den Feldboden geführte Tastbügel oder dergleichen, erfasst werden.

Die von der Steuerungsvorrichtung ansteuerbare Aktuatorik umfasst an der Erntemaschine angeordnete hydraulische Stellglieder, welche dem Heben und Senken der Aufnahmevorrichtung und somit des daran angeordneten Vorsatzgerätes dienen. Darüber hinaus kann das Vorsatzgerät mittels Hydraulikzylindern um eine horizontale Achse relativ zu der Aufnahmevorrichtung in Querrichtung verschwenkbar sein. Zusätzlich oder alternativ kann die von der Steuerungsvorrichtung ansteuerbare Aktuatorik hydraulisch ansteuerbare Mittel zum Ausgleich einer Hanglage der Erntemaschine aufweisen, die den Achsen der Erntemaschine zugeordnet sind, welche eine Veränderung der Achsstellung ermöglichen. Bei Erntemaschinen mit einem solchen Hangausgleich kann am Vorgewende außerdem das Problem auftreten, dass das Vorsatzgerät nur entsprechend des Hangausgleichs nachgeführt werden kann, wenn die Steuerungsvorrichtung von der ersten Sensoranordnung keine Abstandssignale empfängt. Damit ist das Vorsatzgerät nach einem Wendevorgang nicht hinreichend präzise parallel zum Boden ausgerichtet. Durch die erfindungsgemäße Bestimmung der Sollneigung für die Querführung des Vorsatzgerätes und der dann unter Berücksichtigung der vorgegebenen Schneidtiefe unterhalb der Bestandshöhe einzustellenden Querneigung des Vorsatzgerätes wird auch dieses Problem gelöst, bevor erneut in den abzuerntenden Bestand eingefahren wird.

Bevorzugt kann die zumindest eine zweite Sensoranordnung zur berührungslosen Erfassung des Verlaufs der Bestandshöhe eingerichtet sein. Hierzu kann die zweite Sensoranordnung zur Aussendung und zum Empfang von elektromagnetischen Wellen ausgeführt sein. Insbesondere kann die zweite Sensoranordnung als Lidar oder Radar ausgebildet sein.

Insbesondere kann die Steuerungsvorrichtung zur Ansteuerung der zumindest einen zweiten Sensoranordnung eingerichtet sein, dass die zweite Sensoranordnung die Erfassung der Bestandshöhe zyklisch durchführt. Auf diese Weise können Änderungen in der Bestandshöhe zeitnah erfasst werden. Dies erlaubt eine entsprechende Ansteuerung der Aktuatorik durch die Steuerungsvorrichtung, um auf eine daraus resultierende erforderliche Änderung der Lageregelungsparameter für die Höhen- und/oder Querführung zu reagieren.

Bevorzugt kann die zumindest eine zweite Sensoranordnung zur Erfassung der Bestandshöhe entlang einer Abtastlinie zumindest über die Breite des Vorsatzgerätes eingerichtet sein. Somit ist gewährleistet, dass zumindest der Verlauf der Bestandshöhe zumindest über den Bereich der Arbeitsbreite des Vorsatzgerätes, welche im Wesentlichen der Breite des Vorsatzgerätes entspricht, erfasst wird.

Dabei kann die Steuerungsvorrichtung dazu eingerichtet sein, aus den entlang der Abtastlinie durch die zumindest eine zweite Sensoranordnung erfassten Signalen einen Mittelwert zur Bestimmung der Sollhöhe und der Sollneigung zu bilden. Hierdurch kann ein Ausgleich von Spitzen in der erfassten Bestandshöhe, die beispielsweise auf eine wellige Bodenkontur quer zur Fahrtrichtung oder einen vereinzelt abweichenden Wuchs des Erntegutes zurückzuführen sind, erfolgen.

Des Weiteren kann zumindest eine weitere Sensoranordnung vorgesehen sein, welche der Bestimmung eines Auflagedrucks des Vorsatzgerätes auf dem Boden dient. Diese weitere Sensoranordnung dient dazu, das Vorsatzgerät mit einem definierten Auflagedruck über den Boden zu führen, um eine geringe Schnitthöhe zu realisieren, was für die Ernte von niedrig wachsenden Erntegutarten, wie Soja, Erbsen oder Linsen, von Bedeutung ist.

Gemäß einer vorteilhaften Weiterbildung kann die Steuerungsvorrichtung dazu eingerichtet sein, die Höhenführung und die Querführung im Rahmen der Lagerregelung in Abhängigkeit von unterschiedlichen Lageregelungsparametern durchzuführen.

Hierzu kann die Steuerungsvorrichtung zur Auswahl einer Lageregelungsmethode durch eine Bedienperson eingerichtet sein. Die Steuerungsvorrichtung kann hierzu mit einer Eingabe-Ausgabeeinrichtung der Erntemaschine zum Empfang und zur Ausgabe von Daten verbunden sein.

Insbesondere kann die Auswahl der Lageregelungsmethoden eine Schnitthöhenvorwahl, eine Bodendruckregelung, eine Schnitthöhenregelung sowie eine Bestandshöhenregelung umfassen. Die Bedienperson kann somit in Abhängigkeit von der Erntegutart und den Erntebedingungen, insbesondere der Kontur des abzuerntenden Feldbodens, die geeignete Lageregelungsmethode auswählen, um ein möglichst optimales Arbeitsergebnis zu erzielen. Dabei stehen geringe Verluste sowie eine möglichst geringe Belastung von dem Vorsatzgerät nachgeordneten Arbeitsaggregaten der Erntemaschine durch Stroh, Halmgut oder dergleichen im Vordergrund. Für das Ernten von Erntegut, bei welchem ein Ernten mit einem Abstand zum Feldboden sinnvoll ist, der über den Erfassungsbereich der ersten Sensoranordnung hinausgeht, kann sowohl die Höhenführung als auch die Querführung ausschließlich mittels der Lageregelungsmethode Bestandshöhenregelung erfolgen. Hingegen kann die Höhenführung anhand der Schnitthöhenvorwahl durchgeführt werden, während die Querführung anhand der Bestandshöhenregelung erfolgt, wenn die Querführung optimiert werden soll. Die Kombination von zwei Lageregelungsmethoden kann bei Erntemaschinen zum Tragen kommen, welche über eine Funktionalität zum Ausgleich einer Hanglage verfügen. Beispielsweise durch eine Verstellung der Achspositionen der Erntemaschinen. Die Querführung ist, unter anderem aufgrund des Abstands zwischen dem Vorsatzgerät und der Achse, insbesondere am Vorgewende aber auch im Bestand nicht optimal. Bei Erntemaschinen mit einem solchen Hangausgleich kommt am Vorgewende das Problem auf, dass der Vorsatz nur entsprechend des vorgenommenen Hangausgleichs nachgeführt werden kann. Eine während des Durchfahrens des Vorgewendes geänderte Achsposition hat nicht die optimale Einstellung der Querneigung des Vorsatzgerätes beim erneuten Einfahren in den Bestand zur Folge, d.h. das Vorsatzgerät steht nach einem Wendevorgang nicht optimal zum Verlauf der Bestandshöhe. Durch die vorausschauende Erfassung der Bestandshöhe quer zur Fahrrichtung und die damit verbundene Bestimmung der Sollneigung lässt sich eine optimierte Querneigung des Vorsatzgerätes einstellen.

Bevorzugt kann die Steuerungsvorrichtung dazu eingerichtet sein, anhand zumindest eines durch eine Bedienperson vorgebbaren Sollwertes für die Höhenposition des Vorsatzgerätes die anzuwendende Lageregelungsmethode auszuwählen. Aufgrund der Vorgabe des Sollwertes für die Höhenposition des Vorsatzgerätes lässt sich durch die Steuerungsvorrichtung bestimmen, ob der Sollwert für die Höhenposition innerhalb oder außerhalb eines Messbereichs der zumindest einen ersten Sensoranordnung liegt. Bei einer Ausführung der zumindest einen ersten Sensoranordnung als Tastbügel wird bei einem vorgegebenen Sollwert oberhalb einer maximalen Auslenkung des Tastbügels die Bestandshöhenregelung als Lageregelungsmethode durch die Steuerungsvorrichtung ausgewählt. Liegt der vorgegeben Sollwert unterhalb einer minimalen Auslenkung des Tastbügels, so wird durch die Steuerungsvorrichtung die Bodendruckregelung als Lageregelungsmethode ausgewählt. Hingegen wird bei einer Vorgabe eines Sollwertes für die Position der Aufnahmevorrichtung relativ zum Boden, d.h. des Winkels, um den die Aufnahmevorrichtung relativ zu der Erntemaschine um die horizontale Achse verschwenkt wird, die Schnitthöhenvorwahl als Lageregelungsmethode ausgewählt.

Des Weiteren kann die Steuerungsvorrichtung dazu eingerichtet sein, bei Verwendung der Bestandshöhenregelung als Lageregelungsmethode die Höhenführung des Vorsatzgerätes durch die Ansteuerung der Aktuatorik der Aufnahmevorrichtung durchzuführen.

Weiterhin wird die eingangs gestellte Aufgabe durch ein Verfahren gemäß dem Anspruch 12 gelöst.

Gemäß dem Anspruch 12 wird ein Verfahren für die Ansteuerung eines an einer selbstfahrenden Erntemaschine angeordneten Vorsatzgerätes zur Aufnahme von Erntegut, welches an einer um eine horizontale Achse schwenkbar an der Erntemaschine angeordnete Aufnahmevorrichtung angeordnet ist, vorgeschlagen, wobei die Lage des Vorsatzgerätes relativ zum Boden mittels Aktuatoren verstellt wird, wobei die Aktuatoren von einer Steuerungsvorrichtung der Erntemaschine, die zur Lageregelung des Vorsatzgerätes eingerichtet ist, angesteuert werden, wobei an dem Vorsatzgerät zumindest eine erste Sensoranordnung angeordnet ist, mit welcher ein Abstand des Vorsatzgerätes zum Boden bestimmt wird. Es ist zumindest eine zweite Sensoranordnung vorgesehen, durch welche in einem definierten Abstand vor dem Vorsatzgerät der Verlauf einer Bestandshöhe des Erntegutes als ein Lageregelungsparameter erfasst wird, wobei durch die Steuerungsvorrichtung, unabhängig von einem durch die erste Sensoranordnung erfassten Abstand, anhand des durch die zumindest eine zweite Sensoranordnung erfassten Verlaufes der Bestandshöhe eine Sollhöhe für die Höhenführung und eine Sollneigung für die Querführung des Vorsatzgerätes ermittelt und dann unter Berücksichtigung einer vorgegebenen Schneidtiefe unterhalb der Bestandshöhe eine Höhe und eine Querneigung des Vorsatzgerätes einstellt werden. Der wesentliche Vorteil der Höhenführung des Vorsatzgerätes relativ zur Bestandshöhe ist, dass das Vorsatzgerät auch bei hohen Früchten in der Höhe immer optimal geführt wird, so dass alle Früchte geerntet werden, ohne das unnötig viel Pflanzenmaterial in die Erntemaschine gelangt oder die Bedienperson manuell die Höhe des Vorsatzgerätes korrigieren muss. Dadurch wird die Bedienperson entlastet und die Effizienz der Erntemaschine deutlich gesteigert. Zudem wird durch die bestandshöhenabhängige Bestimmung der Sollneigung erreicht, dass unabhängig von der Aushubhöhe des Vorsatzgerätes immer eine optimale Querführung des Vorsatzgerätes gewährleistet ist.

Die vorliegende Erfindung wird nachstehend anhand eines in den Zeichnungen dargestellten Ausführungsbeispieles näher erläutert.

Es zeigen:
- Fig. 1: eine schematische Darstellung einer selbstfahrenden Erntemaschine mit einem daran angeordneten Vorsatzgerät in einer ausschnittweisen, perspektivischen Ansicht;
- Fig. 2: eine schematische Darstellung der Erntemaschine zur Veranschaulichung von Parametern zur Lageregelung des Vorsatzgerätes;
- Fig. 3: eine schematische Darstellung einer Erntemaschine während einer Erntefahrt;
- Fig. 4: eine schematische Darstellung zur Erläuterung der Lageregelung der Querneigung in Fahrtrichtung einer Erntemaschine;
- Fig. 5: eine schematische Darstellung einer Bedienanzeige zur Auswahl einer Lageregelungsmethode.

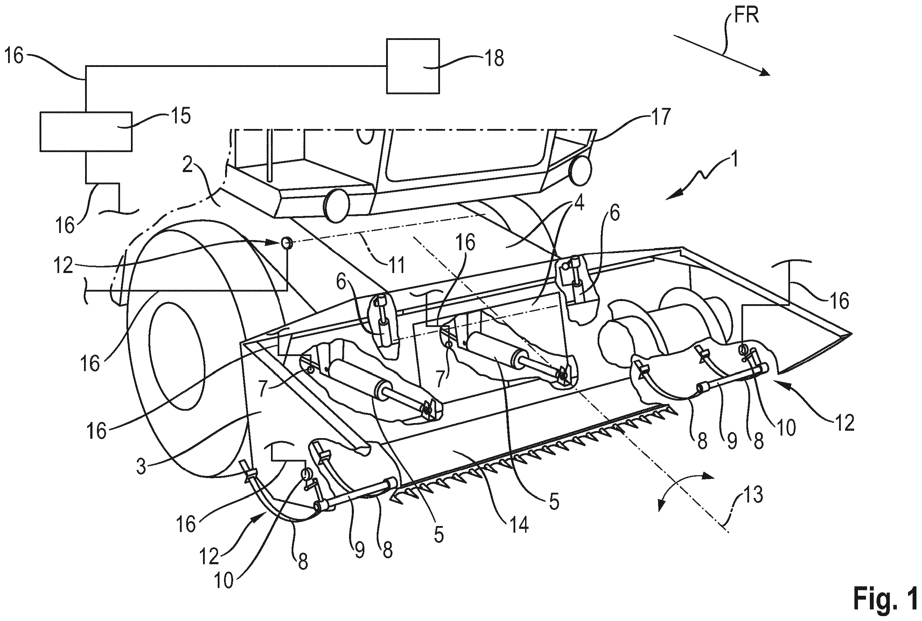

Fig. 1 zeigt eine erfindungsgemäße selbstfahrende Erntemaschine 1, hier einen Mähdrescher, in einer ausschnittweisen perspektivischen Ansicht. Zu sehen sind ein vorderer Teil einer Karosserie 2 der Erntemaschine 1 und ein Vorsatzgerät 3, welches mit der Karosserie 2 mittels einer an der Karosserie 2 der Erntemaschine 1 angeordneten Aufnahmevorrichtung 4 verbunden ist. Die Aufnahmevorrichtung 4 ist um eine horizontal verlaufende Achse 11 schwenkbar. Eine erste Sensoranordnung 12 ist der horizontal verlaufenden Achse 11 zugeordnet und erfasst einen Schwenkwinkel α der Aufnahmevorrichtung 4. Die Neigung der Aufnahmevorrichtung 4 und damit die Höhe des Vorsatzgerätes 3 über einem Feldboden FB ist mit Hilfe von zwei als hydraulischen Stellgliedern 5 ausgebildeten Aktuatoren einstellbar, die einerseits an der Karosserie 2, andererseits an einem vorderen Ende der Aufnahmevorrichtung 4 angreifen. Eine weitere Sensoranordnung 7, die Drucksensoren umfasst, ist, wie in der Figur 1 dargestellt, an zu den Stellgliedern 5 führenden Versorgungsleitungen oder unmittelbar an einer Kammer jedes Stellglieds 5 angeordnet, um den Druck des Hydraulikfluides in den Kammern der Stellglieder 5 zu erfassen. Weitere, als hydraulische Stellglieder 6 ausgebildete, Aktuatoren sind in an sich bekannter Weise zwischen der Aufnahmevorrichtung 4 und dem Vorsatzgerät 3 angeordnet, um das Vorsatzgerät 3 um eine in Fahrtrichtung verlaufende Achse 13 quer zur Fahrtrichtung zu schwenken.

An einer linken und rechten Seite des Vorsatzgerätes 3 sind unter einer Bodenplatte 14 nach unten vorspringende Tastbügel 8 um eine von einer Welle 9 festgelegte Achse schwenkbar montiert. Die Bodenplatte 14 ist teilweise weggeschnitten dargestellt, um die Tastbügel 8 zeigen zu können. Höhensensoren 10 sind an beiden Seiten des Vorsatzgerätes 3 an die Wellen 9 der Tastbügel 8 gekoppelt, um anhand der Stellung der Tastbügel 8 einen jeweiligen Abstand A des Vorsatzgerätes 3 vom Feldboden FB zu erfassen, der einer einzuhaltenden Sollhöhe entspricht. Die Tastbügel 8 bilden zusammen mit den Höhensensoren 10 eine weitere erste Sensoranordnung 12 zur Bestimmung des Abstands A des Vorsatzgerätes 3 zum Feldboden FB.

Für eine passive Querführung des Vorsatzgerätes 3 können endseitig - nicht dargestellte - Stützelemente, wie Schleifkufen oder Stützräder, an dem Vorsatzgerät 3 angeordnet sein, die in Querrichtung durch elastische Elemente von dem Vorsatzgerät partiell mechanisch entkoppelt sind. Wird die Lage des Vorsatzgerätes durch die Stützelemente in der Querlage relativ zu der Erntemaschine 1 verändert, führt dies zu einer Änderung in der Auslenkung der elastischen Elemente. Eine aktive Querführung des Vorsatzgerätes 3 wird ebenfalls durch die Tastbügel 8 ermöglicht. Durch die Erfassung einer Änderung des Abstands A des Vorsatzgerätes 3 zum Feldboden FB an dessen äußeren Enden und eine entsprechende Regelung durch die Ansteuerung der Stellglieder 6 wird die Querneigung des Vorsatzgerätes 3 relativ zu der Erntemaschine 1 durch das Schwenken um die Achse 13 so eingestellt, dass das Vorsatzgeräte 3 im Wesentlichen parallel zum Feldboden geführt wird.

Die Erntemaschine 1 umfasst eine Steuerungsvorrichtung 15, welche durch ein Bussystem 16 mit den Sensoranordnungen 7 und 12 verbunden ist, um von diesen Signale zur Auswertung zu empfangen. Die Auswertung wird zur Lageregelung des Vorsatzgerätes 3 durch die Steuerungsvorrichtung 15 verwendet. Die Lageregelung durch die Steuerungsvorrichtung 15 umfasst die Höhenführung und die Querführung des Vorsatzgerätes 3. Hierzu ist die Steuerungsvorrichtung 15 durch das Bussystem 16 mit den als Stellglieder 5, 6 ausgebildeten Aktuatoren verbunden. Die Steuerungsvorrichtung 15 ist dazu eingerichtet, die Stellglieder 5, 6 anzusteuern, um eine vorgebbare Höhe des Vorsatzgerätes 3 über dem Boden einzustellen sowie eine Querneigung des Vorsatzgerätes 3 gegenüber dem Boden, d.h. eine Neigung quer zur Fahrrichtung FR der Erntemaschine 1. Oberhalb einer - nur teilweise dargestellten - Kabine 17 ist eine zweite Sensoranordnung 18 angeordnet, die gleichfalls durch das Bussystem 16 mit der Steuerungsvorrichtung 15 verbunden ist. Die zweite Sensoranordnung 18 ist zur berührungslosen Erfassung des Verlaufs einer Bestandshöhe B von abzuerntendem Erntegut EG eingerichtet. Hierzu ist die zweite Sensoranordnung 18 beispielsweise als Lidar ausgeführt. Die zweite Sensoranordnung 18 ist bezüglich des Feldbodens FB derart ausgerichtet, dass diese einen in einem definierten Abstand vor dem Vorsatzgerät 3 liegenden Bereich erfasst. Somit wird eine vorausschauende Erfassung erreicht, welche eine vorausschauende Lageregelung des Vorsatzgerätes 3 erlaubt, um flexibler auf Änderungen in der Bodenkontur oder der Bestandshöhe B reagieren zu können.

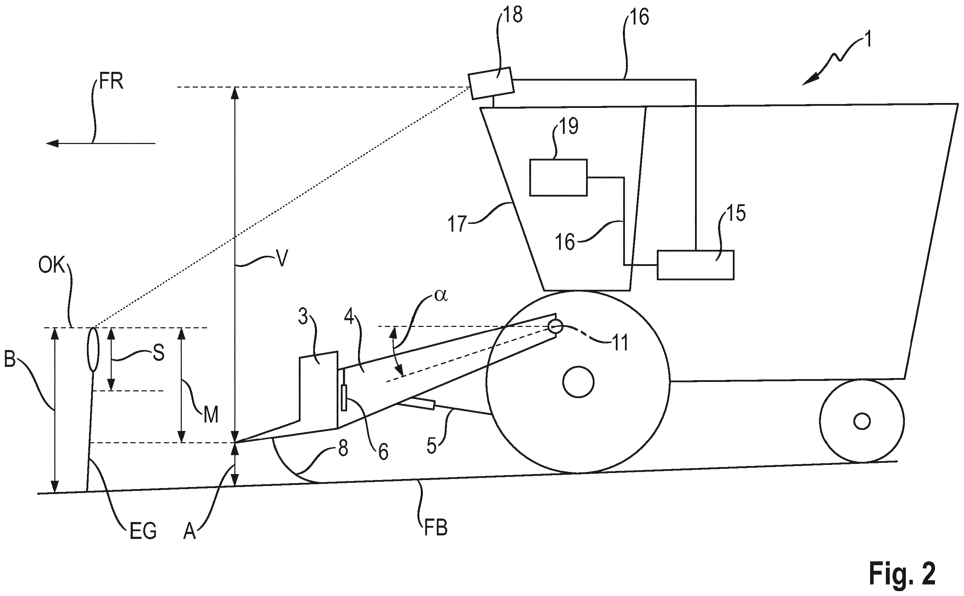

Fig. 2 zeigt eine schematische Darstellung der Erntemaschine 1 zur Veranschaulichung von verschiedenen Lageregelungsparametern zur Lageregelung des Vorsatzgerätes 3. Für die Höhenführung des Vorsatzgerätes 3 im Rahmen der Lageregelung stehen verschiedene Lageregelungsmethoden zur Verfügung, die durch eine Bedienperson der Erntemaschine 1 ausgewählt werden können.

Die Lageregelung bei Höhenführung des Vorsatzgerätes 3 erfolgt gemäß einer von mehreren Lageregelungsmethoden, aus denen ausgewählt werden kann, durch eine Vorgabe des Schwenkwinkels α der Aufnahmevorrichtung 4. Dabei wird die Höhenführung des Vorsatzgerätes 3 in Abhängigkeit von dem Schwenkwinkel α der Aufnahmevorrichtung 4 durchgeführt. Hierzu gibt die Bedienperson zumindest einen Sollwert für den Schwenkwinkel α vor. Die Vorgabe eines Sollwertes für den Schwenkwinkel α erfolgt durch eine Eingabe- Ausgabevorrichtung 19 in der Kabine 17, die mittels des Bussystems 16 mit der Steuerungsvorrichtung 15 verbunden ist. Die Lageregelungsmethode anhand des Schwenkwinkels α der Aufnahmevorrichtung 4 wird als Schnitthöhenvorwahl bezeichnet. Kombiniert wird diese Lageregelungsmethode hinsichtlich der Querführung durch das Erfassen und Auswerten der von den Tastbügeln 8 bereitgestellten Signale für den Abstand A des Vorsatzgerätes 3 zum Feldboden FB. Bei der Höhenführung anhand des Schwenkwinkels α der Aufnahmevorrichtung 4 als Lageregelungsparameter bleiben Änderungen in der Bodenkontur sowie der Bestandshöhe B unberücksichtigt.

Eine weitere auswählbare Lageregelungsmethode bildet eine Schnitthöhenregelung, bei welcher der Abstand A des Vorsatzgerätes 3 relativ zum Feldboden FB durch die Eingabe zumindest eines Sollwertes vorgegeben wird. Die Auswertung der Signale der Tastbügel 8 durch die Steuerungsvorrichtung 15 dient dazu, die Lage des Vorsatzgerätes 3 entsprechend der erfassten Bodenkontur bezüglich der Höhe und der Querneigung zu regeln. Da die Regelung vom Bestehen des Bodenkontakts der Tastbügel 8 abhängig ist, der den Lageregelungsparameter Abstand A erfasst, bleiben auch bei dieser Lageregelungsmethode Änderungen in der Bestandshöhe B des Erntegutes EG unberücksichtigt.

Bei bestimmten Erntegutarten ist es erforderliche, dass Vorsatzgerät 3 zur Aufnahme des Erntegutes EG möglichst nah am Feldboden FB zu führen. Hierzu kann als Lageregelungsmethode eine Bodendruckregelung ausgewählt werden. Die Steuerungsvorrichtung 15 steuert die Stellglieder 5 der Aufnahmevorrichtung 4 in Abhängigkeit von einem vorgebbaren Auflagedruck des Vorsatzgerätes 3 auf dem Boden als Lageregelungsparameter an. Hierfür gibt die Bedienerperson der Erntemaschine 1 zumindest einen Sollwert für den einzuhaltenden Abstand A vor, wobei der Wert des zumindest einen Sollwertes unterhalb eines hinterlegten Wertes liegt, bei welchem der Abstand A zum Feldboden FB gleich Null ist. Der Auflagedruck wird anhand der von der Sensoranordnung 7 erfassten Signale durch die Ansteuerung der Stellglieder 5 durch die Steuerungsvorrichtung 15 geregelt. Im Unterschied zu den Lageregelungsmethoden welche die Schnitthöhenvorwahl oder die Schnitthöhenregelung umfassen, bedarf es bei der Lageregelungsmethode anhand des Bodendrucks des Bodenkontaktes durch das Vorsatzgerät 3. Die Lageregelung bezüglich der Querneigung erfolgt, wie bei den anderen Lageregelungsmethoden auch, mittels der den Boden berührenden Tastbügel 8.

Als weitere Lageregelungsmethode ist eine Bestandshöhenregelung vorgesehen. Als Lageregelungsparameter wird die Bestandshöhe B des Erntegutes EG verwendet, welche vorausschauend durch die Sensoranordnung 18 erfasst wird. Hierzu tastet die Sensoranordnung 18 den Bestand an Erntegut EG in einem definierten Abstand vor dem Vorsatzgerät 3 entlang einer quer verlaufenden Abtastlinie 20 ab, welche zumindest der Breite des Vorsatzgerätes 3 entspricht. Die Abtastung erfolgt zyklisch in festen Zeitintervallen. Die Abtastlinie 20 liegt vor der Erntemaschine 1, so dass die Sensoranordnung 18 daher immer die zukünftige Bestandshöhe B erfasst. Der Abstand der Abtastlinie 20 zu dem Vorsatzgerät 3 ermöglicht es der Steuerungsvorrichtung 15, die von der Sensoranordnung 18 empfangenen Daten auszuwerten und geeignete Steuersignale zu erzeugen, um die Aktuatoren, d.h. die Stellglieder 5 bzw. 6 anzusteuern.

Die Bestandshöhe B relativ zu der Erntemaschine 1 wird durch die am Dach der Kabine 17 angeordnete Sensoranordnung 18 bestimmt. Der jeweilige Abstand A des Vorsatzgerätes 3 relativ zu der Erntemaschine 1 ist aufgrund des Schwenkwinkels α der Aufnahmevorrichtung 4 bekannt. Ebenso ist ein Abstand V zwischen der Sensoranordnung 18 und dem Vorsatzgerät 3 bekannt. Anhand dieser Informationen kann ein Abstand M des Vorsatzgerätes 3 relativ zu der Bestandshöhe B durch die Steuerungsvorrichtung 15 berechnet werden. Mittels eines geeigneten Regelalgorithmus wird das Vorsatzgerät 3 dann durch Ansteuerung der Stellglieder 5 relativ zu der Bestandshöhe B unterhalb einer Oberkante OK des Bestandes positioniert. Eine Schneidtiefe S, welche die einzuhaltende Beabstandung zwischen dem Vorsatzgerät 3 und der Oberkante OK des Bestandes vorgibt, kann von der Bedienperson der Erntemaschine 1, insbesondere fruchtartabhängig, vorgegeben werden.

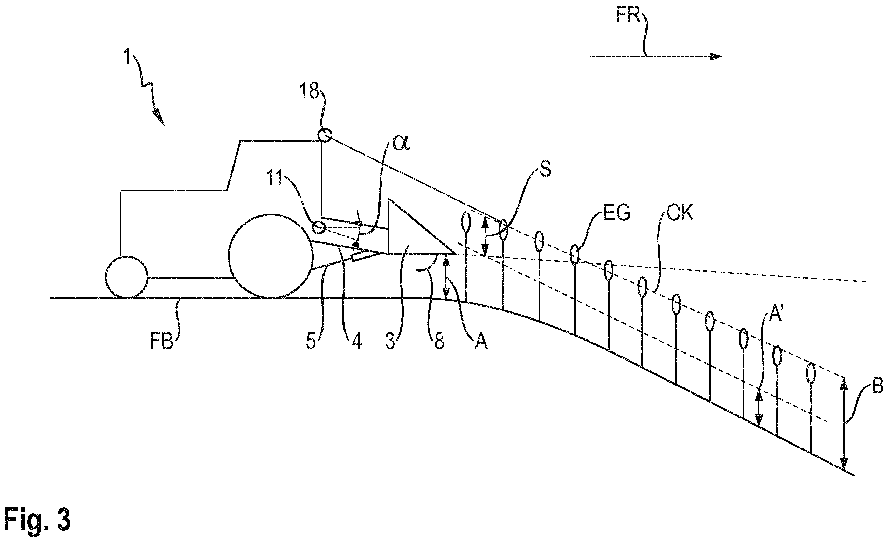

In Fig. 3 ist eine schematische Darstellung einer Erntemaschine 1 während einer Erntefahrt gezeigt. Die Darstellung veranschaulicht die Höhenführung im Rahmen der Lageregelung des Vorsatzgerätes 3 anhand einer sich ändernden Bestandshöhe B. Hierbei weist der Feldboden FB beispielhaft ein Gefälle in Fahrtrichtung FR auf, wodurch sich die Bestandshöhe B ändert. Die zweite Sensoranordnung 18 erfasst, unabhängig von der als Tastbügel 8 ausgebildeten ersten Sensoranordnung, vorausschauend den Verlauf der Bestandshöhe B. Anhand des durch die zumindest eine zweite Sensoranordnung 18 erfassten Verlaufes der Bestandshöhe B wird durch die Steuerungsvorrichtung 15 eine Sollhöhe für die Höhenführung des Vorsatzgerätes 3 ermittelt. In der dargestellten Erntesituation ist die Abstand A des Vorsatzgerätes 3 relativ zu dem Feldboden FB so groß eingestellt, dass die Tastbügel 8 der ersten Sensoranordnung keinen Kontakt zu diesem haben. Eine solche Höhenpositionierung des Vorsatzgerätes 3 wird beispielsweise beim Ernten von Sonnenblumen oder Mais gewählt und als Hochschnitt bezeichnet. Ziel ist es, den Anteil an mit den zu erntenden Früchten aufgenommenem Stroh zu reduzieren, wodurch die Erntemaschine 1 entlastet wird. Bei unverändertem Abstand A des Vorsatzgerätes 3 zum Feldboden FB würde mit dem Vorsatzgerät 3 im Extremfall aus dem Bestand B herausgefahren. Um dies zu vermeiden, regelt die Steuerungsvorrichtung 15 nun anhand des Verlaufs der Bestandshöhe B unter Berücksichtigung der vorgegebenen Schneidtiefe S auf einen Abstand A' des Vorsatzgerätes 3 automatisch nach.

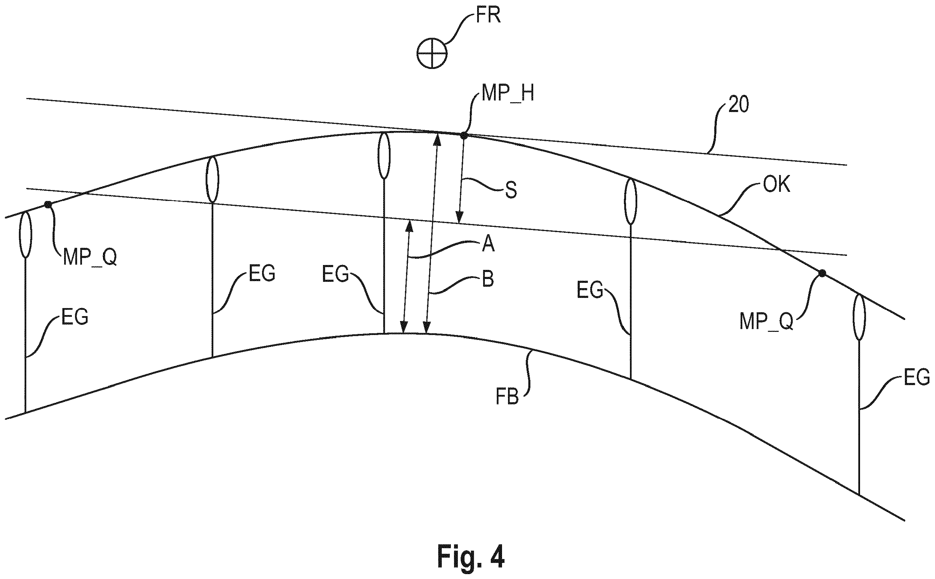

Neben der Höhenführung, wie in Fig. 3 beispielhaft dargestellt, wird anhand des durch die zumindest eine zweite Sensoranordnung 18 erfassten Verlaufes der Bestandshöhe B eine Sollneigung für die Querführung des Vorsatzgerätes 3 ermittelt. In Fig. 4 ist eine schematische Darstellung zur Erläuterung der Lageregelung der Höhen- und Querführung des Vorsatzgerätes 3 in Fahrtrichtung der Erntemaschine 1 gezeigt. Der Verlauf der Bestandshöhe B fällt beiderseits des Vorsatzgerätes 3 aufgrund der Bodenkontur des Feldbodens FB ab. Die zumindest eine Sensoranordnung 18 erfasst entlang der Abtastlinie 20 den Verlauf der Bestandshöhe B. Im Messpunkt MP_H, der im Scheitelpunkt des Verlaufs der Bestandshöhe B liegt, wird ein maximaler Wert für die Höhenführung im Messpunkt MP_H erfasst. Weiterhin werden in den Endbereichen des Vorsatzgerätes 3 jeweils Werte für die Querneigung in Messpunkten MP_Q erfasst.

Die Steuerungsvorrichtung 15 bestimmt einen Mittelwert aus den entlang der Abtastlinie 20 über zumindest die gesamte Breite des Vorsatzgerätes 3 empfangenen Signale für den Abstand A, welcher als Sollhöhe unter Berücksichtigung der Schneidtiefe S verwendet wird, um das Vorsatzgerät 3 durch die Ansteuerung der Stellglieder 5, 6 einzustellen. Führt eine Absenkung des Vorsatzgerätes 3 während der Lageregelung anhand der Bestandshöhe B dazu, dass die Tastbügel 8 mit dem Feldboden FB in Kontakt kommen, führt dies nicht zu einer Änderung der Lageregelungsmethode. Erst wenn der durch die Tastbügel 8 erfasste Abstand A zum Feldboden FB so gering wird, dass eine Beschädigung des Vorsatzgerätes 3 zu erwarten ist, wird die Lageregelungsmethode automatisch geändert.

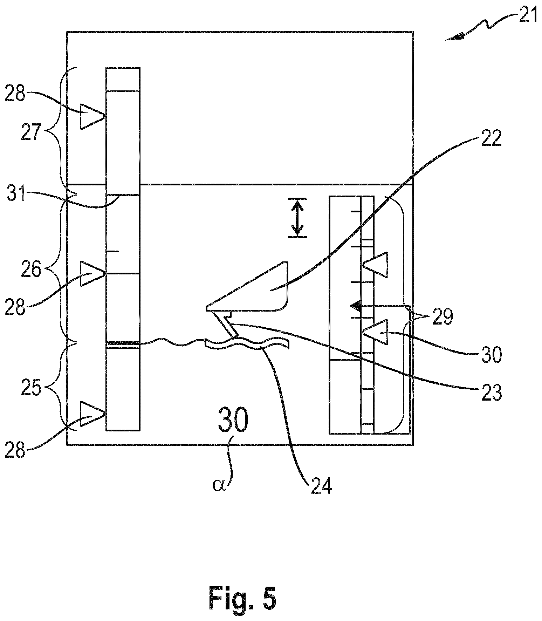

Fig. 5 zeigt eine schematische Darstellung einer Bedienanzeige 21 zur Auswahl einer Lageregelungsmethode für das Vorsatzgerät 3. Die Ansicht zeigt ein als Symbol 22 dargestelltes Vorsatzgerät sowie ein Symbol 23 für unterhalb des Vorsatzgerätes 3 angeordneten Tastbügel 8. Weiterhin ist der Feldboden FB durch ein Symbol 24 dargestellt, mit welchem der durch das Symbol 23 visualisierte Tastbügel 8 in Berührung steht. Benachbart zu dem den Feldboden FB visualisierenden Symbol 24 sind in Form eines gestapelten Balkendiagramms mehrere Einstellbereiche 25, 26, 27 dargestellt, für die durch die Bedienperson zumindest ein Sollwert, visualisiert durch ein Symbol 28, für den Abstand A des Vorsatzgerätes 3 relativ zum Feldboden FB vorgebbar ist. Der Einstellbereich 25 liegt unterhalb des Symbols 24, während die Einstellbereiche 26 und 27 oberhalb des Symbols 24 positioniert sind.

Dem gestapelten Balkendiagramm gegenüberliegend ist eine Skala 29 dargestellt, welche einen Einstellbereich für den Schwenkwinkel α wiedergibt. Ein vorgebbarer Sollwert für den Schwenkwinkel α ist durch ein Symbol 30 visualisiert. Ein als Sollwert eingestellter Zahlenwert für den Schwenkwinkel α kann innerhalb der Bedienanzeige 21 dargestellt werden. Die Steuerungsvorrichtung 15 ist dazu eingerichtet, in Abhängigkeit von dem vorgebbaren Sollwert 28 für den Abstand A die geeignete Lageregelungsmethode auszuwählen. Ist der vorgegebene Sollwert 28 derart gewählt, dass dieser im Einstellbereich 25, d.h. unterhalb des Feldbodensymbols 24 liegt, wird als Lageregelungsmethode die Bodendruckregelung gewählt. Liegt der vorgegebene Sollwert 28 oberhalb des Feldbodensymbols 24, jedoch unterhalb einer Erfassungsgrenze 31 für den Abstand A des Vorsatzgerätes 3 zum Feldboden B durch die erste Sensoranordnung 12, d.h. im Einstellbereich 26, so wird als Lageregelungsmethode die Schnitthöhenregelung automatisch ausgewählt. Wird durch die Bedienperson ein Sollwert für die Schneidtiefe S vorgegeben, deren Abstand A zum Boden oberhalb der Erfassungsgrenze 31 liegt, d.h. im Einstellbereich 27, so wird von der Steuerungsvorrichtung 15 als Lageregelungsmethode automatisch die Bestandshöhenregelung ausgewählt. Dieser automatisierten Auswahl anhand des vorgegebenen Sollwertes für den Abstand A bzw. die Schneidtiefe S steht die Vorgabe eines Sollwertes für den Schwenkwinkel α der Aufnahmevorrichtung 4 gegenüber, welcher zur automatischen Auswahl der Lageregelungsmethode Schnitthöhenvorwahl durch die Steuerungsvorrichtung 15 führt.

**Bezugszeichenliste**

| | | | |
|---|---|---|---|
| 1 | Erntemaschine | 31 | Erfassungsgrenze |
| 2 | Karosserie | | |
| 3 | Vorsatzgerät | A | Abstand |
| 4 | Aufnahmevorrichtung | A' | Abstand |
| 5 | Stellglied | B | Bestandshöhe |
| 6 | Stellglied | EG | Erntegut |
| 7 | Sensoranordnung | FB | Feldboden |
| 8 | Tastbügel | FR | Fahrtrichtung |
| 9 | Welle | M | Abstand |
| 10 | Höhensensor | MP_H | Messpunkt |
| 11 | Horizontale Achse | MP_Q | Messpunkt |
| 12 | Erste Sensoranordnung | OK | Oberkante |
| 13 | Achse | S | Schneidtiefe |
| 14 | Bodenplatte | V | Abstand |
| 15 | Steuerungsvorrichtung | α | Schwenkwinkel |
| 16 | Bussystem | | |
| 17 | Kabine | | |
| 18 | Zweite Sensoranordnung | | |
| 19 | Eingabe- Ausgabevorrichtung | | |
| 20 | Abtastlinie | | |
| 21 | Bedienanzeige | | |
| 22 | Symbol | | |
| 23 | Symbol | | |
| 24 | Symbol | | |
| 25 | Einstellbereich | | |
| 26 | Einstellbereich | | |
| 27 | Einstellbereich | | |
| 28 | Symbol | | |
| 29 | Skala | | |
| 30 | Symbol | | |

## Patentansprüche

1. Selbstfahrende Erntemaschine (1) mit einem Vorsatzgerät (3) zur Aufnahme von Erntegut (EG), welches an einer um eine horizontale Achse (11) schwenkbar an der Erntemaschine (1) angeordneten Aufnahmevorrichtung (4) angeordnet ist, wobei die Lage des Vorsatzgerätes (3) relativ zum Boden (FB) mittels Aktuatoren (5, 6) verstellbar ist, welche von einer Steuerungsvorrichtung (15) der Erntemaschine (1), die zur Lageregelung des Vorsatzgerätes (3) richtet ist, ansteuerbar sind, wobei an dem Vorsatzgerät (3) zumindest eine erste Sensoranordnung (12) angeordnet ist, welche der Bestimmung eines Abstands (A) des Vorsatzgerätes (3) zum Boden (FB) dient, wobei zumindest eine zweite Sensoranordnung (18) vorgesehen ist, welche in einem definierten Abstand vor dem Vorsatzgerät (3) den Verlauf einer Bestandshöhe (B) des Erntegutes (EG) als einen Lageregelungsparameter erfasst, **dadurch gekennzeichnet, dass** die Steuerungsvorrichtung (15) dazu eingerichtet ist, unabhängig von einem durch die erste Sensoranordnung (18) erfassten Abstand (A), anhand des durch die zumindest eine zweite Sensoranordnung (18) erfassten Verlaufes der Bestandshöhe (B) eine Sollhöhe für die Höhenführung und eine Sollneigung für die Querführung des Vorsatzgerätes (3) zu ermitteln, und dann unter Berücksichtigung einer vorgegebenen Schneidtiefe (S) unterhalb der Bestandshöhe (B) eine Höhe und eine Querneigung des Vorsatzgerätes (3) einzustellen.

2. Erntemaschine (1) nach Anspruch 1, **dadurch gekennzeichnet, dass** die Steuerungsvorrichtung (15) dazu eingerichtet ist, als Lageregelungsparameter neben der Bestandshöhe (B) die Position der Aufnahmevorrichtung (4) relativ zum Boden (FB), den Abstand (A) des Vorsatzgerätes (3) zum Boden (FB) und/oder einen Auflagedruck des Vorsatzgerätes (3) auf dem Boden (FB) zu verwenden.

3. Erntemaschine (1) nach Anspruch 1 oder 2, **dadurch gekennzeichnet, dass** die zumindest eine zweite Sensoranordnung (18) zur berührungslosen Erfassung des Verlaufs der Bestandshöhe (B) eingerichtet ist.

4. Erntemaschine (1) nach einem der Ansprüche 1 bis 3, **dadurch gekennzeichnet, dass** die Steuerungsvorrichtung zur Ansteuerung der zumindest einen zweiten Sensoranordnung eingerichtet ist, dass die zweite Sensoranordnung die Erfassung der Bestandshöhe zyklisch durchführt.

5. Erntemaschine (1) nach einem vorangehenden Ansprüche, **dadurch gekennzeichnet, dass** die zumindest eine zweite Sensoranordnung (18) zur Erfassung der Bestandshöhe (B) entlang einer Abtastlinie (20) zumindest über die Breite des Vorsatzgerätes (3) eingerichtet ist.

6. Erntemaschine (1) nach Anspruch 5, **dadurch gekennzeichnet, dass** die Steuerungsvorrichtung (15) dazu eingerichtet ist, aus den entlang der Abtastlinie (20) durch die zumindest eine zweite Sensoranordnung (15) erfassten Signalen einen Mittelwert zur Bestimmung der Sollhöhe und der Sollneigung zu bilden.

7. Erntemaschine (1) nach einem der Ansprüche 2 bis 6, **dadurch gekennzeichnet, dass** zumindest eine weitere Sensoranordnung (7) vorgesehen ist, welche der Bestimmung eines Auflagedrucks des Vorsatzgerätes (3) auf dem Boden (FB) dient.

8. Erntemaschine (1) nach einem vorangehenden Ansprüche, **dadurch gekennzeichnet, dass** die Steuerungsvorrichtung (15) dazu eingerichtet ist, die Höhenführung und die Querführung im Rahmen der Lagerregelung in Abhängigkeit von unterschiedlichen Lageregelungsparametern durchzuführen.

9. Erntemaschine (1) nach einem vorangehenden Ansprüche, **dadurch gekennzeichnet, dass** die Steuerungsvorrichtung (15) zur Auswahl einer Lageregelungsmethode durch eine Bedienperson eingerichtet ist.

10. Erntemaschine (1) nach Anspruch 9, **dadurch gekennzeichnet, dass** die Auswahl der Lageregelungsmethoden eine Schnitthöhenvorwahl, eine Bodendruckregelung, eine Schnitthöhenregelung sowie eine Bestandshöhenregelung umfasst.

11. Erntemaschine (1) nach Anspruch 9, **dadurch gekennzeichnet, dass** die Steuerungsvorrichtung (15) dazu eingerichtet ist, anhand zumindest eines durch eine Bedienperson vorgebbaren Sollwertes für die Höhenposition des Vorsatzgerätes (3) die anzuwendende Lageregelungsmethode auszuwählen.

12. Verfahren für die Ansteuerung eines an einer selbstfahrenden Erntemaschine (1) angeordneten Vorsatzgerätes (3) zur Aufnahme von Erntegut (EG), welches an einer um eine horizontale Achse (11) schwenkbar an der Erntemaschine (1) angeordneten Aufnahmevorrichtung (4) angeordnet ist, wobei die Lage des Vorsatzgerätes (3) relativ zum Boden (FB) mittels Aktuatoren (5, 6) verstellt wird, wobei die Aktuatoren (5, 6) von einer Steuerungsvorrichtung (15) der Erntemaschine (1), die zur Lageregelung des Vorsatzgerätes (1) eingerichtet ist, angesteuert werden, wobei an dem Vorsatzgerät (3) zumindest eine erste Sensoranordnung (12) angeordnet ist, mit welcher ein Abstand (A) des Vorsatzgerätes (3) zum Boden (FB) bestimmt wird, wobei zumindest eine zweite Sensoranordnung (18) vorgesehen ist, durch welche in einem definierten Abstand vor dem Vorsatzgerät (3) der Verlauf einer Bestandshöhe (B) des Erntegutes (EG) als ein Lageregelungsparameter erfasst wird, **gekennzeichnet dadurch, dass** durch die Steuerungsvorrichtung (15), unabhängig von einem durch die erste Sensoranordnung (12) erfassten Abstand (A), anhand des durch die zumindest eine zweite Sensoranordnung (18) erfassten Verlaufes der Bestandshöhe (B) eine Sollhöhe für die Höhenführung und eine Sollneigung für die Querführung des Vorsatzgerätes(3) ermittelt und dann unter Berücksichtigung einer vorgegebenen Schneidtiefe (S) unterhalb der Bestandshöhe (B) eine Höhe und eine Querneigung des Vorsatzgerätes (3) einstellt werden.

## Claims

1. A self-propelled harvesting machine (1) with a front attachment (3) for picking up harvest material (EG) and which is pivotably disposed about a horizontal axis (11) on a pickup device (4) disposed on the harvesting machine (1), wherein the position of the front attachment (3) relative to the ground (FB) can be adjusted by means of actuators (5, 6) which can be controlled by a control device (15) of the harvesting machine (1) which is configured to control the position of the front attachment (3), wherein at least one first sensor assembly (12) is disposed on the front attachment (3) which serves to determine a distance (A) between the front attachment (3) and the ground (FB), wherein at least one second sensor assembly (18) is provided which detects the profile of the crop height (B) of the harvest material (EG) at a specified distance in front of the front attachment (3) as a position controlling parameter, **characterized in that** independently of a distance (A) detected by the first sensor assembly (18), the control device (15) is configured so as to determine, with the aid of the profile of the crop height (B) detected by means of the at least one second sensor assembly (18), a nominal height for the height guidance and a nominal inclination for the transverse guidance for the front attachment (3), and then to set a height and a transverse inclination for the front attachment (3) having regard to a prescribed cutting depth (S) below the crop height (B).

2. The harvesting machine (1) according to claim 1, **characterized in that** in addition to the crop height (B), the control device (15) is configured to use, as the position controlling parameter, the position of the pickup device (4) relative to the ground (FB), the distance (A) between the front attachment (3) and the ground (FB) and/or a ground pressure of the front attachment (3) on the ground (FB).

3. The harvesting machine (1) according to claim 1 or claim 2, **characterized in that** the at least one second sensor assembly (18) is configured for contactless detection of the profile of the crop height (B).

4. The harvesting machine (1) according to one of claims 1 to 3, **characterized in that** the control device for controlling the at least one second sensor assembly is configured such that the second sensor assembly carries out the detection of the crop height in a cyclic manner.

5. The harvesting machine (1) according to one of the preceding claims, **characterized in that** the at least one second sensor assembly (18) is configured for detecting the crop height (B) along a gauging line (20) over at least the width of the front attachment (3).

6. The harvesting machine (1) according to claim 5, **characterized in that** the control device (15) is configured to form a mean value for the determination of the nominal height and the nominal inclination from the signals detected along the gauging line (20) by the at least one second sensor assembly (15).

7. The harvesting machine (1) according to one of claims 2 to 6, **characterized in that** at least one further sensor assembly (7) is provided which serves for the determination of a ground pressure of the front attachment (3) on the ground (FB).

8. The harvesting machine (1) according to one of the preceding claims, **characterized in that** the control device (15) is configured to carry out the height guidance and the transverse guidance in the context of the control of the position as a function of different position controlling parameters.

9. The harvesting machine (1) according to one of the preceding claims, **characterized in that** the control device (15) is configured for an operator to select a position controlling method.

10. The harvesting machine (1) according to claim 9, **characterized in that** the selection of the position controlling method comprises preselection of the cutting height, control of the ground pressure, control of the cutting height as well control of the crop height.

11. The harvesting machine (1) according to claim 9, **characterized in that** the control device (15) is configured to select the position controlling method to use with the aid of at least one nominal value for the height position of the front attachment (3) which can be specified by an operator.

12. A method for controlling a front attachment (3) disposed on a self-propelled harvesting machine (1) for picking up harvest material (EG) and which is pivotably disposed about a horizontal axis (11) on a pickup device (4) disposed on the harvesting machine (1), wherein the position of the front attachment (3) relative to the ground (FB) is adjusted by means of actuators (5, 6), wherein the actuators (5, 6) are controlled by a control device (15) of the harvesting machine (1) which is configured to control the position of the front attachment (1), wherein at least one first sensor assembly (12) is disposed on the front attachment (3) with which a distance (A) between the front attachment (3) and the ground (FB) is determined, wherein at least one second sensor assembly (18) is provided by means of which the profile of the crop height (B) of the harvest material (EG) is determined at a specified distance in front of the front attachment (3) as a position controlling parameter, **characterized in that** independently of a distance (A) detected by the first sensor assembly (18), by means of the control device (15), with the aid of the profile of the crop height (B) detected by means of the at least one second sensor assembly (18), a nominal height for the height guidance and a nominal inclination for the transverse guidance for the front attachment (3) is determined, and then a height and a transverse inclination for the front attachment (3) is set having regard to a prescribed cutting depth (S) below the crop height (B).

## Revendications

1. Machine de récolte automotrice (1) comprenant un outil frontal (3) pour ramasser du produit récolté (EG), lequel est monté pivotant sur un dispositif de ramassage (4) monté sur la machine de récolte (1) de manière pivotante autour d'un axe horizontal (11), la position de l'outil frontal (3) par rapport au sol (FB) étant réglable au moyen d'actionneurs (5, 6) qui sont commandables par un dispositif de commande (15) de la machine de récolte (1) qui est agencé pour réguler la position de l'outil frontal (3), sur l'outil frontal (3) étant disposé au moins un premier agencement de capteur (12) qui sert à déterminer une distance (A) de l'outil frontal (3) au sol (FB), au moins un second agencement de capteur (18) étant prévu, lequel détecte à une distance définie devant l'outil frontal (3) la variation de la hauteur de culture (B) du produit récolté (EG) comme paramètre de régulation positionnelle, **caractérisée en ce que** le dispositif de commande (15) est agencé pour déterminer, indépendamment d'une distance (A) détectée par le premier agencement de capteur (18), à l'aide de la variation de la hauteur de culture (B) détectée par l'intermédiaire du au moins un second agencement de capteur (18), une hauteur de consigne pour le guidage en hauteur et une inclinaison de consigne pour le guidage transversal de l'outil frontal (3) et pour régler ensuite une hauteur et une inclinaison transversale de l'outil frontal (3) en tenant compte d'une profondeur de coupe prédéfinie (S) au-dessous de la hauteur de culture (B).

2. Machine de récolte (1) selon la revendication 1, **caractérisée en ce que** le dispositif de commande (15) est agencé pour utiliser comme paramètre de régulation positionnelle, en dehors de la hauteur de culture (B), la position du dispositif de ramassage (4) par rapport au sol (FB), la distance (A) de l'outil frontal (3) par rapport au sol (FB) et/ou une pression d'appui de l'outil frontal (3) sur le sol (FB).

3. Machine de récolte (1) selon la revendication 1 ou 2, **caractérisée en ce que** le au moins un second agencement de capteur (18) est agencé pour détecter sans contact la variation de la hauteur de culture (B).

4. Machine de récolte (1) selon une des revendications 1 à 3, **caractérisée en ce que** le dispositif de commande est agencé pour commander le au moins un second agencement de capteur, de façon que le second agencement de capteur effectue la détection de la hauteur de culture cycliquement.

5. Machine de récolte (1) selon une des revendications précédentes, **caractérisée en ce que** le au moins un second agencement de capteur (18) est agencé pour détecter la hauteur de culture (B) le long d'une ligne de palpage (20) au moins sur la largeur de l'outil frontal (3).

6. Machine de récolte (1) selon la revendication 5, **caractérisée en ce que** le dispositif de commande (15) est agencé pour former, à partir des signaux détectés le long de la ligne de palpage (20) par le au moins un second agencement de capteur (15), une valeur moyenne pour déterminer la hauteur de consigne et l'inclinaison de consigne.

7. Machine de récolte (1) selon une des revendications 2 à 6, **caractérisée en ce qu'**il est prévu au moins un autre agencement de capteur (7) qui sert à déterminer une pression d'appui de l'outil frontal (3) sur le sol (FB).

8. Machine de récolte (1) selon une des revendications précédentes, **caractérisée en ce que** le dispositif de commande (15) est agencé pour effectuer le guidage en hauteur et le guidage transversal dans le cadre de la régulation positionnelle en fonction de différents paramètres de régulation positionnelle.

9. Machine de récolte (1) selon une des revendications précédentes, **caractérisée en ce que** le dispositif de commande (15) est agencé pour sélectionner une méthode de régulation positionnelle par l'intermédiaire d'un opérateur.

10. Machine de récolte (1) selon la revendication 9, **caractérisée en ce que** la sélection des méthodes de régulation positionnelle inclut une présélection de hauteur de coupe, une régulation de pression au sol, une régulation de hauteur de coupe ainsi qu'une régulation de hauteur de culture.

11. Machine de récolte (1) selon la revendication 9, **caractérisée en ce que** le dispositif de commande (15) est agencé pour sélectionner la méthode de régulation positionnelle à appliquer à l'aide au moins d'une valeur de consigne prescriptible par un opérateur pour la position en hauteur de l'outil frontal (3).

12. Procédé pour la commande d'un outil frontal (3) disposé sur une machine de récolte automotrice (1) pour ramasser du produit récolté (EG), lequel est monté pivotant sur un dispositif de ramassage (4) monté sur la machine de récolte (1) de manière pivotante autour d'un axe horizontal (11), la position de l'outil frontal (3) par rapport au sol (FB) étant réglée au moyen d'actionneurs (5, 6), les actionneurs (5, 6) étant commandés par un dispositif de commande (15) de la machine de récolte (1) qui est agencé pour réguler la position de l'outil frontal (1), sur l'outil frontal (3) étant disposé au moins un premier agencement de capteur (12) avec lequel une distance (A) de l'outil frontal (3) au sol (FB) est déterminée, au moins un second agencement de capteur (18) étant prévu, lequel détecte à une distance définie devant l'outil frontal (3) la variation de la hauteur de culture (B) du produit récolté (EG) comme paramètre de régulation positionnelle, **caractérisé en ce qu'**une hauteur de consigne pour le guidage en hauteur et une inclinaison de consigne pour le guidage transversal de l'outil frontal sont déterminées par l'intermédiaire du dispositif de commande (15), indépendamment d'une distance (A) détectée par le premier agencement de capteur (12), à l'aide de la variation de la hauteur de culture (B) détectée par le au moins un second agencement de capteur (18), et une hauteur et une inclinaison transversale de l'outil frontal (3) sont ensuite réglées en tenant compte d'une profondeur de coupe prescrite (S) au-dessous de la hauteur de culture (B).
